# EUROPÄISCHE PATENTANMELDUNG

(11) **EP 1 595 904 A2**
(43) Veröffentlichungstag der Anmeldung: **16.11.2005**
(21) Anmeldenummer: 05007475.6
(22) Anmeldetag: 06.04.2005
(51) Int. Cl.: C08G 18/28, C08G 18/66, F16L 59/14, C08J 9/08

(54) **Gedämmtes Rohr, enthaltend mit Ameisensäure hergestelltes Polyurethan**

(30) Priorität: 12.05.2004 DE 102004023881
(71) Anmelder: BASF Aktiengesellschaft, 67056 Ludwigshafen (DE)
(72) Erfinder: Grieser-Schmitz, Christof, 49076 Osnabrück (DE)

(57) **Zusammenfassung**

Die Erfindung betrifft gedämmte Rohre, aufgebaut aus einem Mediumrohr (i), das von einem Polyurethanschaumstoff (ii) umgeben ist, der gegebenenfalls von einem Mantelrohr (iii) umgeben ist, wobei der Polyurethanschaumstoff erhältlich ist durch Umsetzung von Polyisocyanaten (a)mit einer Polyolmischung (b), enthaltend ein Hartschaumpolyol (b1) und ein Weichschaumpolyol (b2), in Gegenwart von Ameisensäure (c).

## Beschreibung

Die Erfindung betrifft gedämmte Rohre, aufgebaut aus einem Mediumrohr (i), das von einem Polyurethanschaumstoff (ii) umgeben ist, der gegebenenfalls von einem Mantelrohr (iii) umgeben ist, wobei der Polyurethanschaumstoff erhältlich ist durch Umsetzung von Polyisocyanaten (a)mit einer Polyolmischung (b), enthaltend ein Hartschaumpolyol (b1) und ein Weichschaumpolyol (b2), in Gegenwart von Ameisensäure (c).

Die Herstellung von gedämmten, d.h. isolierten Rohren oder anderen Verbundelementen, die zur thermischen Isolierung von heißen oder kalten Stoffen dienen, beispielsweise Sandwichelementen ist allgemein bekannt. Als Isoliermaterial wird aufgrund der hervorragenden thermischen Isolationseigenschaften häufig Polyurethanhartschaumstoff eingesetzt, der gegebenenfalls Isocyanuratstrukturen aufweisen kann. So lehrt WO 00/39497 harte, gedämmte Rohre, die als Isoliermaterial Polyurethan-Polyisocyanurat-Hartschaumstoffe enthalten.

Die oben erwähnten gedämmten Rohre sind hart und daher nicht auf Rollen wickelbar. Dieser Nachteil kann durch die Verwendung von sogenannten "semiflexiblen" gedämmten Rohren umgangen werden. Zur Herstellung von semiflexiblen Rohren ist die Verwendung von langkettigen Polyetherolen bekannt, wobei die langkettigen Polyetherole zur Erlangung der notwendigen Flexibilität erforderlich sind. Problematisch ist, dass die langkettigen Polyetherole die mechanischen Eigenschaften (z.B. Druckfestigkeit, Faltenwurf) und die Wärmebeständigkeit negativ beeinflussen.

Des weiteren wäre es wünschenswert, die Wärmeleitfähigkeit der aus dem Stand der Technik bekannten PUR-Systeme zu senken und das Reaktionsprofil zu verbessern (kürzere Startzeit bei gleicher bzw. längerer Abbindezeit wünschenswert).

Aufgabe der Erfindung war es daher, gedämmte Rohre, insbesondere semiflexible gedämmte Rohre bereitzustellen, die einerseits vorteilhafte mechanischen Eigenschaften (z.B. Druckfestigkeit, Faltenwurf) aufweisen und andererseits auch eine gute Wärmebeständigkeit (Kochtest nach EN 253) zeigen. Insbesondere sollen die erfindungsgemäßen Rohre keinen verkaufshinderlichen Faltenwurf durch Schaumversagen sowie keine Brüche (weniger als 1 Knall pro Meter beim Aufwickeln der Rohrlängen) zeigen.

Des weiteren war es Aufgabe der Erfindung, die Wärmeleitfähigkeit der bekannten PUR-Systeme zu senken und das Reaktionsprofil zu verbessern (kürzere Startzeit bei gleicher bzw. längerer Abbindezeit).

Die Aufgaben der Erfindung konnten durch Verwendung eines speziellen Polyolgemisches in Verbindung mit der Verwendung eines speziellen Treibmittels gelöst werden.

Gegenstand der Erfindung ist daher ein gedämmtes Rohr,
aufgebaut aus
(i) einem Mediumrohr, das von
(ii) einem Polyurethanschaumstoff umgeben ist, der gegebenenfalls von
(iii) einem Mantelrohr umgeben ist,
wobei der Polyurethanschaumstoff erhältlich ist durch Umsetzung von
a) Polyisocyanaten mit
b) einer Polyolmischung, enthaltend
   b1) ein Hartschaumpolyol und
   b2) ein Weichschaumpolyol, in Gegenwart von
c) Ameisensäure.

Das erfindungsgemäße gedämmtes Rohr ist aus zwei oder gegebenenfalls drei "Schichten" aufgebaut. Die innerste Schicht bildet ein (i) Mediumrohr, das von einem Polyurethanschaumstoff als Dämmmaterial (ii) umgeben ist. Der Polyurethanschaumstoff ist gegebenenfalls von einem Mantelrohr (iii) umgeben.

Das Mediumrohr (i) ist im allgemeinen ein Metall- oder ein Kunststoffrohr, es kann beispielsweise auf folgenden Materialien basieren: Metalle, insbesondere Kupfer, Edelstahl, unlegierter Stahl und Aluminium sowie Kunststoffe, insbesondere vernetztes Polyethylen (PEX). Im Falle von Metallrohren handelt es sich bevorzugt um eine geschweißtes Rohr mit Qualität nach ISO 9330-1 oder um eine nahtloses Rohr mit Qualität nach ISO 9329-1.

Der Außendurchmesser des Mediumrohres beträgt im allgemeinen 20 bis 700 mm, bevorzugt 25 bis 400 mm. Die Wanddicke des Mediumrohres (i) beträgt üblicherweise 0,5 bis 10 mm, bevorzugt 1 bis 8 mm, besonders bevorzugt 2 bis 7 mm.

Der Schaumstoff (ii) kann an dem Mediumrohr haften, dies ist bevorzugt. Alternativ ist es möglich, auf die äußere Oberfläche des Mediumrohres übliche Trennmittel aufzutragen, die eine Haftung des Schaumstoffs (ii) an das Mediumrohr verhindern.

Auf der Außenseite des Mediumrohres angeordnet ist eine Schicht aus Polyurethan-Dämmmaterial (ii), enthaltend den erfindungsgemäßen Polyurethanschaumstoff. Diese Schicht weist im allgemeinen eine Dicke von 1 bis 10 cm, bevorzugt 2 bis 5 cm auf.

In einer bevorzugten Ausführungsform weist die Schicht aus Dämmmaterial eine Gesamtrohdichte von 40 bis 90 kg/m³, bevorzugt von 50 bis 80 kg/m³ und besonders bevorzugt von 55 bis 70 kg/m³ auf. Unter Gesamtrohdichte ist hier die Rohdichteverteilung über den Rohrquerschnitt und die Rohrlänge gemeint.

Das optionale Mantelrohr (iii) kann beispielsweise auf folgenden Materialien basieren: thermoplastischen Kunststoffen, insbesondere HDPE und LDPE und Metallen, wie z.B. Wickelfalzblechen.

Der Außendurchmesser des Mantelrohres beträgt im allgemeinen 30 bis 800 mm, bevorzugt 75 bis 500 mm. Die Wanddicke des Mantelrohres (iii) beträgt üblicherweise 0,5 mm bis 15 mm, bevorzugt 1 bis 13 mm, besonders bevorzugt 2 bis 10 mm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält. Geeignete Mantelrohre dieses Typs sind in EP-A-960 723 beschrieben.

Zur Herstellung des als Dämmmaterial verwendeten Polyurethanschaumstoffs (ii) ist folgendes auszuführen:

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Zur Herstellung von Polyurethan-Hartschaumstoffen wird insbesondere Roh-MDI eingesetzt.

In einer bevorzugten Ausführungsform wird die Isocyanatkomponente (a) so gewählt, dass sie eine Viskosität weniger als 750 mPas, bevorzugt von 100 bis 550, besonders bevorzugt von 150 bis 450, insbesondere von 170 bis 250 mPas, gemessen nach DIN 53019 bei 25°C, aufweist.

Im Stand der Technik ist es gegebenenfalls üblich, Isocyanuratgruppen in das Polyisocyanat einzubauen. Hierfür werden bevorzugt Isocyanuratgruppen bildende Katalysatoren, beispielsweise Alkalimetallsalze alleine oder in Kombination mit tertiären Aminen eingesetzt. Die Isocyanurat-Bildung führt zu flammwidrigen Polyisocyanurat(PIR)-Schaumstoffen, welche bevorzugt im technischen Hartschaum, beispielsweise im Bauwesen als Dämmplatte oder Sandwichelemente, eingesetzt werden.

Im Rahmen dieser Erfindung ist es möglich, dass die erfindungsgemäßen Polyurethansysteme und Polyurethanschaumstoffe im wesentlichen frei von Isocyanuratgruppen sind. In diesem Fall beträgt im Schaumstoff das Verhältnis Isocyanuratgruppe zu Urethangruppe kleiner als 1:10, bevorzugt kleiner als 1:100.

Die Polyolmischung (b) enthält Polyole. Als Polyole kommen im allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole kommen bevorzugt Verbindungen auf Basis von Polyesterolen oder Polyetherolen zum Einsatz. Die Funktionalität der Polyetherole und/oder Polyesterole beträgt im allgemeinen 1,9 bis 8, bevorzugt 2,4 bis 6, besonders bevorzugt 2,9 bis 4.

Besonders bevorzugt werden in der Polyolmischung Polyetherpolyole verwendet. Diese werden üblicherweise nach bekannten Verfahren, beispielsweise durch anionische Polymerisation mit Alkalihydroxiden als Katalysatoren und unter Zusatz mindestens eines Startermoleküls das 2 bis 8, vorzugsweise 3 bis 8 reaktive Wasserstoffatome gebunden enthält, aus einem oder mehreren Alkylenoxiden mit 2 bis 4 Kohlenstoffatomen im Alkylenrest hergestellt.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül TMP und TDA und Saccharose verwendet.

Es ist erfindungswesentlich, dass die Polyolmischung (b) mindestens ein Hartschaumpolyol (b1) und ein Weichschaumpolyol (b2) enthält.

Bei den Hartschaumpolyolen (b1) handelt es sich um Polyole, bevorzugt um Polyetherpolyole, die üblicherweise zur Herstellung eines Polyurethanhartschaumstoffs eingesetzt werden. Im allgemeinen weisen die Hartschaumpolyole im Rahmen dieser Erfindung ein zahlenmittleres Molekulargewicht von 300 bis 1100 g/mol, mehr bevorzugt von 350 bis 1000 g/mol, besonders bevorzugt von 400 bis 900 g/mol und insbesondere von 450 bis 800 g/mol auf.

Im allgemeinen weisen die Hartschaumpolyole im Rahmen dieser Erfindung eine theoretische Funktionalität (die sich aus der Funktionalität der Startermoleküle ergibt) von 2,5 bis 8, bevorzugt von 2,7 bis 5 auf.

Bei den Weichschaumpolyolen (b2) handelt es sich um Polyole, bevorzugt um Polyetherpolyole, die üblicherweise zur Herstellung eines Polyurethanweichschaumstoffs eingesetzt werden. Im allgemeinen weisen die Weichschaumpolyole (b2) im Rahmen dieser Erfindung ein zahlenmittleres Molekulargewicht von 1500 bis 8000 g/mol, mehr bevorzugt von 1700 bis 6000 g/mol, besonders bevorzugt von 1900 bis 5500 g/mol und insbesondere von 2000 bis 5000 g/mol auf.

Im allgemeinen weisen die Weichschaumpolyole (b2) im Rahmen dieser Erfindung eine theoretische Funktionalität (die sich aus der Funktionalität der Startermoleküle ergibt) von 1,9 bis 4, bevorzugt von 2 bis 3 auf.

Im allgemeinen enthält die Polyolmischung (b) eine größere Menge Hartschaumpolyol (b1) als Weichschaumpolyol (b2).

In einer bevorzugten Ausführungsform wird das Hartschaumpolyol (b1) in einer Menge von 40 bis 95 Gew.-%, mehr bevorzugt von 50 bis 93 Gew.-%, besonders bevorzugt von 60 bis 90 Gew.-% und insbesondere von 70 bis 88 Gew.-%, bezogen auf das Gesamtgewicht der Polyolmischung (b), eingesetzt.

In einer bevorzugten Ausführungsform wird das Weichschaumpolyol (b2) in einer Menge von 5 bis 60 Gew.-%, mehr bevorzugt von 7 bis 50 Gew.-%, besonders bevorzugt von 10 bis 40 Gew.-% und insbesondere von 12 bis 30 Gew.-%, bezogen auf das Gesamtgewicht der Polyolmischung (b), eingesetzt.

Es ist möglich, dass die Polyolmischung (b) als Bestandteil (b3) Vernetzer enthält. Unter Vernetzer werden Verbindungen verstanden, die ein Molekulargewicht von 60 bis weniger als weniger 300 g/mol aufweisen und mindestens 3 gegenüber Isocyanaten reaktive Wasserstoffatome aufweisen. Ein Beispiel hierfür ist Glycerin. Üblicherweise handelt es sich bei Vernetzern nicht um polymere Verbindungen (beispielsweise solche, die durch Alkoxylierung entstanden sind)

Die Vernetzer werden im allgemeinen in einer Menge von 1 bis 10 Gew.-%, bevorzugt von 2 bis 5 Gew.-%, bezogen auf das Gesamtgewicht der Polyolmischung (b), eingesetzt.

Es ist möglich, dass die Polyolmischung (b) als Bestandteil (b4) Kettenverlängerungsmittel enthält, die der Erhöhung der Vernetzungsdichte dienen. Unter Kettenverlängerungsmittel werden Verbindungen verstanden, die ein Molekulargewicht von 60 bis weniger als 300 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol. Üblicherweise handelt es sich bei Kettenverlängerungsmittel nicht um polymere Verbindungen (beispielsweise solche, die durch Alkoxylierung entstanden sind).

Die Kettenverlängerungsmittel werden im allgemeinen in einer Menge von 1 bis 20 Gew.-%, bevorzugt von 4 bis 15 Gew.-%, bezogen auf das Gesamtgewicht der Polyolmischung (b), eingesetzt.

Die Komponenten (b3) und (b4) können in der Polyolmischung einzeln oder in Kombination eingesetzt werden.

Die Umsetzung von Polyisocyanaten (a) mit der Polyolmischung, welche die Bestandteile (b1) und (b2) und gegebenenfalls (b3) und/oder (b4) enthält und auch als Polyolkomponente (b) bezeichnet wird, erfolgt in Gegenwart von Ameisensäure als Treibmittel (c).

Im allgemeinen wird die Ameisensäure (c) in einer Menge von 0,1 bis 3 Gew.-%, bevorzugt von 0,3 bis 2 Gew.-%, mehr bevorzugt von 0,5 bis 1,5 Gew.-% und besonders bevorzugt von 0,8 bis 1,2 Gew.-%, bezogen auf das Gesamtgewicht der Polyolmischung (b), eingesetzt

In einer bevorzugten Ausführungsform wird die Ameisensäure (c) als Co-Treibmittel eingesetzt, d.h. die Umsetzung von Polyisocyanaten (a) mit der Polyolmischung (b) erfolgt in Gegenwart von weiteren Treibmitteln, wobei chemische Treibmittel und/oder physikalische Treibmittel verwendet werden können. Als chemisches Treibmittel ist Wasser bevorzugt. Das chemische Treibmittel wird im allgemeinen in einer Menge von 0,1 bis 5 Gew.-%, insbesondere von 0,5 bis 3,0 Gew.-%, bezogen auf das Gewicht der Komponente (b), eingesetzt.

Wie vorstehend erwähnt kann die Polyolmischung physikalisches Treibmittel enthalten. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 20 Gew.-%, besonders bevorzugt 3 bis 15 Gew.-%, bezogen auf das Gesamtgewicht der Komponente (b) eingesetzt.

In einer bevorzugten Ausführungsform wird als Komponente (c) ein Gemisch aus Ameisensäure, Wasser und physikalischem Treibmittel, bevorzugt einem Alkan mit 4 oder 5 Kohlenstoffatomen, mehr bevorzugt einem Pentan, insbesondere cyclo-Pentan, verwendet. In dieser Ausführungsform beträgt die Menge an Ameisensäure 5 bis 30 Gew.-%, bevorzugt 6 bis 20 Gew.-%, die Menge an Wasser 1 bis 20 Gew.-%, bevorzugt 2 bis 15 Gew.-% und die Menge an physikalischem Treibmittel, bevorzugt an Cyclopentan, 50 bis 94 Gew.-%, bevorzugt 65 bis 92 Gew.-%, bezogen auf das Gesamtgewicht der 3-Komponentenmischung (c).

Die Umsetzung der Komponenten (a) und (b) kann gegebenenfalls in Gegenwart von Katalysatoren (d) erfolgen. Als Katalysatoren (d) werden üblicherweise Verbindungen verwendet, welche die Reaktion der Hydroxylgruppen enthaltenden Verbindungen der Komponenten (b) mit den Isocyanatgruppen beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im allgemeinen in einer Menge von 0,01 bis 6 Gew.-%, bevorzugt von 0,05 bis 5 Gew.-% und besonders bevorzugt von 0,1 bis 4,0 Gew.-% Katalysator, bezogen auf das Gewicht der Komponente (b), eingesetzt.

Dem erfindungsgemäßen Polyurethansystem können gegebenenfalls auch noch Zusatzstoffe (e) einverleibt werden. Unter Zusatzstoffe (e) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Durch Umsetzung der Komponenten (a) bis (c) und gegebenenfalls (d) und (e) sind Polyurethanschaumstoffe erhältlich, welche die Schicht (ii) in den erfindungsgemäßen gedämmten Rohren bilden. Bei der Umsetzung werden die Polyisocyanate (a) und die Polyolmischung (b) im allgemeinen in solchen Mengen zur Umsetzung gebracht, dass die Isocyanat-Kennzahl des Schaums 90 bis 500beträgt. Für den Fall, dass keine oder wenig Isocyanuratgruppen im Schaumstoff enthalten sein sollen, beträgt die Isocyanat-Kennzahl des Schaums 90 bis 250, bevorzugt 100 bis 180, mehr bevorzugt 110 bis 149.

Für den Fall, dass Isocyanuratgruppen im Schaumstoff enthalten sein sollen, beträgt die Isocyanat-Kennzahl des Schaumstoffes 251 bis 500, bevorzugt 280 bis 450, mehr bevorzugt 300 bis 400.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,2 N/mm², bevorzugt größer 0,25 N/mm², besonders bevorzugt größer 0,3 N/mm², gemessen nach DIN 53421, aufweist.

In einer weiteren bevorzugten Ausführungsform weist die Schicht aus Polyurethanschaumstoff (ii), eine Wärmeleitfähigkeit von weniger als 27 mW/mK, bevorzugt von 19 bis 24 mW/mK, gemessen nach EN ISO 8497 auf.

In einer weiteren bevorzugten Ausführungsform werden die Komponenten (a) bis (c) und gegebenenfalls (d) des Polyurethansystems so gewählt, dass der resultierende Schaumstoff eine geschlossenzellige Schaumstruktur aufweist. Bevorzugt liegt die Geschlossenzelligkeit über 88 %, besonders bevorzugt über 91 % besonders bevorzugt 94, gemessen nach DIN ISO 4590. Der mittlere Zelldurchmesser des resultierenden Schaumstoffs beträgt im allgemeinen 50 bis 500 µm, bevorzugt 80 bis 150 µm, besonders bevorzugt 100 bis 120 µm, gemessen nach ASTM D 3576.

Gegenstand der Erfindung ist ferner ein Verfahren zur Herstellung der erfindungsgemäßen gedämmten Rohren, aufgebaut aus
(i) einem Mediumrohr, das von
(ii) einem Polyurethanschaumstoff umgeben ist, der gegebenenfalls von
(iii) einem Mantelrohr umgeben ist,
durch Bereitstellen der Rohre (i) und gegebenenfalls (iii) und Umsetzung von
a) Polyisocyanaten mit
b) einer Polyolmischung, enthaltend
   b1) ein Hartschaumpolyol und
   b2) ein Weichschaumpolyol, in Gegenwart von
c) Ameisensäure
zu einem Polyurethanschaumstoff, der mit den Rohren (i) und gegebenenfalls (iii) verbunden ist.

Die Ausgangskomponenten werden üblicherweise bei einer Temperatur von 15 bis 80°C, vorzugsweise von 20 bis 60°C und insbesondere von 20 bis 35°C, gemischt und gegebenenfalls unter erhöhtem Druck zur Umsetzung gebracht. Die Vermischung kann mechanisch mittels eines Rührers, mittels einer Rührschnecke oder durch eine Hochdruckvermischung in einer Düse oder Mischkopf durchgeführt werden.

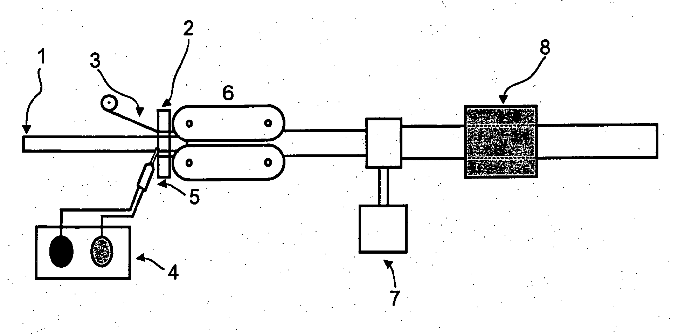

Die Herstellung von gedämmten Rohren ist dem Fachmann allgemein geläufig. Bevorzugt erfolgt sie kontinuierlich nach Figur 1.

In Figur 1 bedeutet:
1 Mediumrohr
2 Formschulter
3 Folie
4 PUR-Schäumanlage
5 Mischkopf
6 Backenband
7 PE-Extruder
8 Wasserbad

Das Mediumrohr (1) wird von Trommeln abgewickelt und kontinuierlich dem Prozess zugeführt. Die beiden flüssigen Komponenten werden mittels der PUR-Schäumanlage (4) dem Mischkopf (5) zugeführt und verlassen diesen als intensiv vermischtes, flüssiges Reaktionsgemisch. Die kontinuierlich zugeführte, bevorzugt diffusionshemmende, gegebenenfalls mehrlagige Folie (3) wird über die Formschulter (2) schlauchförmig zusammengeführt und gegebenenfalls oben verschweißt. Das flüssige Reaktionsgemisch wird in den vorgeformten Folienschlauch eingebracht und füllt durch Aufschäumen den vorhandenen Ringspalt während des Durchlaufens des rohrförmig ausgebildeten Backenbanden (6). Optional kann an Stelle des Backenbandes auch ein Kalibrierrohr (gegebenenfalls beheiztes Führungsrohr) oder eine Kombination aus beidem eingesetzt werden. Nach Verlassen des Backenbandes erhält man ein bereits mit PUR-Schaum umgebenes Mediumrohr, welches anschließend von einen Ringextruder (7) mit dem PE-Außenmantel versehen wird. Der heiße PE-Mantel wird abschließend von einem Wasserbad (8) abgekühlt. Das fertige Rohr wird dann anschließend wieder auf große Trommeln aufgewickelt.

Da aufgrund des flexiblen Materials ein Aufwickeln der gedämmten Rohre möglich ist, kann auf ein Stückeln der bevorzugt kontinuierlich hergestellten Rohre verzichtet werden. Es somit möglich, gedämmte Rohre mit einer Länge von mehr als 50 m, bevorzugt mehr als 200 m, insbesondere mehr als 400 m herzustellen und diese auf Trommeln aufzuwickeln.

Im Vergleich zum Stand der Technik gewährleisten die erfindungsgemäßen gedämmten Rohren ein Aufwickeln der Rohre auf Trommeln mit weniger als einem Bruch pro Meter.

Des weiteren weisen sie im Vergleich zum Stand der Technik mit einem λ-Wert von 23 bis 24 mW/m*K (gemessen nach EN ISO 8497) eine günstigere Wärmeleitfähigkeit, insbesondere bei Rohrdimensionen über 110 mm Außendurchmesser, auf.

Des weiteren ist das Verfahren zur Herstellung des Polyurethanschaumstoffs (ii) gegenüber dem Stand der Technik vorteilhaft, da die Startzeit (20°C, Laborwert) nur etwa 6 bis 8 Sekunden bei gleichzeitig verzögerter Abbindezeit von > 25s beträgt und es zu keinem verkaufshinderlichen Faltenwurf durch Schaumversagen kommt.

Die Erfindung soll anhand nachfolgender Beispiele veranschaulicht werden.

### Beispiele:

Zur Herstellung gedämmter Rohre wurden die Rezepturen 1 und 2 verwendet.

| **Rezepturen für den Polyurethanschaumstoff (ii)** | | |
|---|---|---|
| **Beispiel** | **1** | **2** |
| **Polyol A** | 20 | - |
| **Polyol B** | - | 25 |
| **Polyol C** | 40 | 62,3 |
| **Polyol D** | 27,3 | - |
| **Tegostab B 8423 (Stabilisator)** | 1,5 | 1,5 |
| **DMCHA (Katalysator)** | 3 | 3 |
| **Wasser** | 0,2 | 1 |

| **Rezepturen für den Polyurethanschaumstoff (ii)** | | |
|---|---|---|
| **Ameisensäure** | 1,5 | 0,7 |
| **Pentan** | 6,5 | 6,5 |
| **IsoPMDI 92140** | 101 | 103 |
| **Isocyanat-Index** | 125 | 125 |
| **Reaktionsdaten, 20 °C, Labor** | | |
| **Startzeit (s)** | 6 | 8 |
| **Abbindezeit (s)** | 35 | 29 |
| **Wärmeleitfähigkeit (mW/(m*K) nach EN ISO 8497** | 23 | 22 |

| | **Funktionalität** | **OH-Zahl** | **Molekulargewicht** |
|---|---|---|---|
| **Polyol A** | 2,7 | 28 | 5400 |
| **Polyol B** | 2,7 | 35 | 4400 |
| **Polyol C** | 3,8 | 405 | 530 |
| **Polyol D** | 3,9 | 402 | 545 |

Die erfindungsgemäß gedämmten Rohre wurden, wie vorstehen mit Figur 1 näher erläutert, hergestellt.

## Patentansprüche

1. Gedämmtes Rohr,
aufgebaut aus
(i) einem Mediumrohr, das von
(ii) einem Polyurethanschaumstoff umgeben ist, der gegebenenfalls von
(iii) einem Mantelrohr umgeben ist,
wobei der Polyurethanschaumstoff erhältlich ist durch Umsetzung von
a) Polyisocyanaten mit
b) einer Polyolmischung, enthaltend
b1) ein Hartschaumpolyol und
b2) ein Weichschaumpolyol, in Gegenwart von
c) Ameisensäure.

2. Gedämmtes Rohr nach Anspruch 1, **dadurch gekennzeichnet, dass** das Hartschaumpolyol (b1) ein zahlenmittleres Molekulargewicht von 300 bis 1100 g/mol und das Weichschaumpolyol (b) ein zahlenmittleres Molekulargewicht von 1500 bis 8000 g/mol aufweist.

3. Gedämmtes Rohr nach Anspruch 1 oder 2, **dadurch gekennzeichnet, dass** das Hartschaumpolyol (b1) in einer Menge von 40 bis 95 Gew.-%, und das Weichschaumpolyol (b2) in einer Menge von 5 bis 60 Gew.-%, bezogen auf das Gesamtgewicht der Polyolmischung (b), eingesetzt wird.

4. Gedämmtes Rohr nach einem der Ansprüche 1 bis 3, **dadurch gekennzeichnet, dass** die Ameisensäure (c) in einer Menge von 0,3 bis 2 Gew.-%, bezogen auf das Gesamtgewicht der Polyolmischung (b), eingesetzt wird.

5. Gedämmtes Rohr nach einem der Ansprüche 1 bis 4, **dadurch gekennzeichnet, dass** als Komponente (c) ein Gemisch aus Ameisensäure, Wasser und einem Alkan aus 4 oder 5 Kohlenstoffatomen verwendet wird.

6. Verfahren zur Herstellung von gedämmten Rohren, aufgebaut aus
(i) einem Mediumrohr, das von
(ii) einem Polyurethanschaumstoff umgeben ist, der gegebenenfalls von
(iii) einem Mantelrohr umgeben ist,
durch Bereitstellen der Rohre (i) und gegebenenfalls (iii) und Umsetzung von
a) Polyisocyanaten mit
b) einer Polyolmischung, enthaltend
b1) ein Hartschaumpolyol und
b2) ein Weichschaumpolyol, in Gegenwart von
c) Ameisensäure
zu einem Polyurethanschaumstoff, der mit den Rohren (i) und gegebenenfalls (iii) verbunden ist.

7. Verfahren nach Anspruch 6, **dadurch gekennzeichnet, dass**
**dadurch gekennzeichnet, dass** man die Reaktionsmischung zur Herstellung des Polyurethanschaumstoffes (ii) in eine rohrförmig vorgeformte Folie, die ein Mediumrohr (i) mit einem zu füllenden Ringspalt umschließt, füllt, den von der Folie umgebenen Schaumstoff (ii) gegebenenfalls in einen Ringextruder führt und ein thermoplastisches Material auf die Folie extrudiert.
